# EUROPÄISCHE PATENTSCHRIFT

(11) **EP 3 245 083 B1**
(45) Veröffentlichungstag und Bekanntmachung des Hinweises auf die Patenterteilung: **13.01.2021**
(21) Anmeldenummer: 15812972.6
(22) Anmeldetag: 26.11.2015
(51) Int. Cl.: B60J 7/04, B60J 7/043, B32B 17/10, B60Q 3/208

(54) **DECKEL EINES FAHRZEUGDACHES MIT EINER BELEUCHTUNGSEINRICHTUNG**
VEHCILE ROOF COVER WITH ILLUMINATING MEANS
COUVERCLE DE VÉHICULE AVEC UN DISPOSITIF D'ILLUMINATION

(30) Priorität: 12.01.2015 DE 102015000071
(43) Veröffentlichungstag der Anmeldung: 22.11.2017
(73) Patentinhaber: Webasto SE, 82131 Stockdorf (DE)
(72) Erfinder: THANNHEIMER, Johannes, 82131 Stockdorf (DE); LORENZ, Steffen, 82131 Stockdorf (DE); BÖHM, Hubert, Stockdorf 82131 (DE); SCHÜTT, Thomas, 82131 Stockdorf (DE)
(74) Vertreter: Fischer & Konnerth
(86) Internationale Anmeldenummer: PCT/EP2015/077847
(87) Internationale Veröffentlichungsnummer: WO 2016/113027

(56) Entgegenhaltungen:
- EP-A1- 1 336 520
- EP-A1- 1 493 557
- EP-A1- 1 594 692
- DE-A1-102005 047 656
- DE-A1-102012 109 900
- DE-U1-202009 018 915
- FR-A1- 2 984 251
- FR-A1- 2 989 041
- FR-A1- 2 994 889
- US-A1- 2012 320 621

## Beschreibung

Die Erfindung betrifft einen Deckel eines Fahrzeugdaches, der eine Scheibe, eine an der Scheibeninnenseite angeordnete Splitterschutzschicht und eine eine Leuchtschicht aufweisende Beleuchtungseinrichtung aufweist, wobei eine Leucht- und Splitterschutzschicht sowohl die Splitterschutzschicht als auch die Leuchtschicht in dieser einen Schicht bildet.

Aus der DE 10 2012 109 900 A1 ist ein Deckel eines Fahrzeugdaches bekannt geworden, der eine Scheibe und eine an der Scheibeninnenseite mittels einer Verbindungsschicht stoffschlüssig verbundene lichtleitende Schicht aufweist, in die mittels einer Lichtquelle stirnseitig Licht einstrahlbar ist. Die flächige Lichtabstrahlung aus der lichtleitenden Schicht kann durch in der lichtleitenden Schicht eingebettete Partikel erfolgen. Die Verbindungsschicht kann als Laminierschicht dienen und sie kann auch eine Splitterschutzschicht oder Splitterschutzfolie bilden.

Aus der EP 1 493 557 A1 ist ein gattungsgemäßer Deckel eines Fahrzeugdaches bekannt geworden, der eine Glasscheibe mit einer Kombinationsfolie aufweist, die von einer Splitterschutzfolie gebildet ist und mittels einer Schmelzklebefolie auf die Innenseite der Glasscheibe auflaminiert ist. In der Kombinationsfolie sind elektrische Funktionselemente integriert.

Aus der DE 10 2005 047 656 A1 ist eine Verbundscheibe mit einer starren Glasscheibe bekannt geworden, auf die eine Schutzfolie mittels einer Klebeschicht aufkaschiert ist. Die Schutzfolie kann eine Splitterschutzfolie sein und sie kann zugleich einen Träger oder einen Teil eines mehrlagigen Trägers für Funktionsschichten bilden. Eine solche funktionelle Schicht kann z. B. eine Beleuchtungseinrichtung umfassen.

Aus der DE 10 2012 109 900 A1 ist ein Deckel eines Fahrzeugdaches bekannt geworden, der eine Scheibe und eine lichtleitende Schicht aufweist, die mittels einer Laminierschicht an der Scheibeninnenseite flächig angebracht ist. An der Stirnseite der lichtleitenden Schicht ist eine Lichtquelle angeordnet, die Licht in die lichtleitende Schicht einkoppelt. Die lichtleitende Schicht ist von einer starre Glasplatten oder von einer flexiblen Folie gebildet.

Aus der FR 2 994 889 A1, der FR 2 984 251 A1 sowie der US 2012/0320621 A1 sind jeweils Deckel mit einer Scheibenanordnung mit zwei Scheiben bekannt, die miteinander mittels einer Klebeschicht verbunden sind.

Der Erfindung liegt die Aufgabe zugrunde, einen eingangs genannten Deckel zu schaffen, der hinsichtlich der Positionierung der Beleuchtungseinrichtung relativ zur Leucht- und Splitterschutzschicht verbessert ist.

Diese Aufgabe wird bei dem eingangs genannten Deckel erfindungsgemäß dadurch gelöst, dass die Beleuchtungseinrichtung zumindest eine Leuchteinheit enthält, die an einem Seitenrandbereich der Leucht- und Splitterschutzschicht zum Einstrahlen von Licht in die Leucht- und Splitterschutzschicht vorgesehen ist, und dass zumindest eine Positionierleiste für die Befestigung der Leuchteinheit und/oder für die Zuordnung der Leuchteinheit zu einem Einstrahlrand der Leucht- und Splitterschutzschicht vorgesehen ist, wobei die Leucht- und Splitterschutzschicht von einer Leucht- und Splitterschutzfolie gebildet ist, die an, auf oder in dieser Positionierleiste mit ihrem den Einstrahlrand enthaltenden Randbereich mit Abstand zur Deckelinnenseite angeordnet ist.

Vorteilhafte Ausgestaltungen der Erfindung sind in den abhängigen Ansprüchen angegeben.

Die Leucht- und Splitterschutzschicht bildet somit sowohl die Leuchtschicht als auch die Splitterschutzschicht in dieser einen Schicht. Da nur diese eine Leucht- und Splitterschutzschicht an der Deckelunterseite anzubringen ist, ist die Herstellung des Deckels vereinfacht gegenüber dem bekannten Deckel, bei dem einerseits die die Splitterschutzschicht darstellende Verbindungsschicht auf der Deckelinnenseite angebracht wird und andererseits die lichtleitende Schicht als Deckschicht auf die Verbindungs- bzw. Splitterschutzschicht aufgebracht wird.

In bevorzugter Gestaltung weist die Leucht- und Splitterschutzschicht eine Dicke von etwa 0,15 mm bis 0,75 mm und insbesondere von etwa 0,2 mm bis 0,5 mm auf und sie ist insbesondere von einer Leucht- und Splitterschutzfolie aus Polyethylenterephthalat (PET) mit einer Dicke von etwa 0,2 mm gebildet. Jedoch eigenen sich auch andere Kunststofffolien, die eine entsprechende Festigkeit für einen Splitterschutz sowie die Fähigkeit aufweisen, Licht zu leiten und aus der Schicht z. B. nach unten in den Fahrzeuginnenraum auszustrahlen.

Die Leucht- und Splitterschutzschicht bzw. die Folie oder PET-Folie wird bevorzugt in einem Laminierverfahren bei Raumtemperatur auf die Scheibe aufgebracht. Ein solches Laminierverfahren ist z. B. aus der DE 10 2007 003 173 A1 bekannt. Die Leucht- und Splitterschutzschicht bzw. die Folie oder PET-Folie ist zweckmäßigerweise an zwei sich gegenüber liegenden Seiten des Deckels mit Öffnungen oder Perforationen gebildet. Eine PU-Umschäumung des Deckels oder eine Kleberaupe dringt durch die Öffnungen oder Perforationen und verstärkt zusätzlich die Befestigung der Schicht oder Folie an einem Deckelrahmen, Deckelinnenblech oder im Falle einer Festverglasung am Fahrzeugrahmen.

Der erfindungsgemäße Deckel kann somit mit geringerem Gewicht, geringeren Kosten und geringerem Bauraum in Richtung senkrecht zum Deckel bzw. zur Scheibe und mit einem einfach auszuführenden Laminierverfahren hergestellt werden.

Erfindungsgemäß enthält die Beleuchtungseinrichtung zumindest eine Leuchteinheit, die an einem Seitenrandbereich der Leucht- und Splitterschutzschicht zum Einstrahlen von Licht in die Leucht- und Splitterschutzschicht vorgesehen ist. Die Leuchteinheit kann insbesondere LEDs oder Micro-LEDs enthalten, die an einem Einstrahlrand der Leucht- und Splitterschutzschicht entlang dem Seitenrandbereich des Deckels angeordnet sind. Der Einstrahlrand der Leucht- und Splitterschutzschicht ist z. B. eine Schnittkante, die senkrecht oder auch schräg zu der Leucht- und Splitterschutzschicht ausgerichtet sein kann. Insbesondere strahlt die Leuchteinheit Licht direkt und unmittelbar in die Leucht- und Splitterschutzschicht ein. Demnach befinden sich keine weiteren lichtleitenden Bauteile im Lichtstrahlweg.

Erfindungsgemäß ist vorgesehen, dass zumindest eine Positionierleiste für die Befestigung der Leuchteinheit und/oder für die Zuordnung der Leuchteinheit zu dem Einstrahlrand der Leucht- und Splitterschutzschicht vorgesehen ist. Die Positionierleiste kann ein flaches streifenförmiges Bauteil, ein offenes Profil wie z. B. ein U-förmiges Profil oder auch ein geschlossenes Hohlprofil sein. Die Positionierleiste erleichtert und verbessert die Montage der Leuchteinheit, da sie eine optimierte gegenseitige Zuordnung gestattet. Als Positionierleiste wird ein solches längliches Bauteil bezeichnet, das je nach Gestaltung und Querschnittsform in unterschiedlicher Art und Weise die Leucht- und Splitterschutzschicht und/oder die Leuchteinheit gegeneinander und/oder an der Scheibe oder dem Deckel positioniert. Die Positionierleiste ist z. B. aus Kunststoff hergestellt.

Zweckmäßigerweise ist die Positionierleiste an der Deckelinnenseite insbesondere benachbart zum Deckelrand angebracht. Erfindungsgemäß ist die Leucht- und Splitterschutzschicht von einer Leucht- und Splitterschutzfolie gebildet, die an, auf oder in dieser Positionierleiste mit ihrem den Einstrahlrand enthaltenden Randbereich mit Abstand zur Deckelinnenseite angeordnet. Die Positionierleiste kann somit nur für die Aufnahme der Leucht- und Splitterschutzschicht vorgesehen sein, während die Leuchteinheit am Deckel angebracht sein kann. Andererseits kann die Positionierleiste auch für die Aufnahme der Leuchteinheit vorgesehen und gebildet sein.

In bevorzugter Gestaltung weist die Positionierleiste eine Innen- oder Unterseite, mit der sie an der Deckelinnenseite angeordnet ist, und eine gegenüber liegende Außen- oder Oberseite auf, die die Leucht- und Splitterschutzschicht mit ihrem den Einstrahlrand enthaltenden Randbereich mit Abstand zur Deckelinnenfläche trägt. Dazu kann die Außen- oder Oberseite eine gekrümmte oder geneigte Übergangsfläche aufweisen, die zur Deckelmitte hin in einer z. B. keilförmigen Spitze ausläuft und eine kontinuierliche Befestigungsunterlage für die Leucht- und Splitterschutzschicht bildet.

Wenn die Positionierleiste einen Aufnahmeabschnitt aufweist, an dem die Leuchteinheit in Zuordnung zu der Leucht- und Splitterschutzschicht anbringbar ist, so kann die Leuchteinheit in einfacher Weise ihre korrekte Position einnehmen. Der Aufnahmeabschnitt erleichtert damit die Montage.

Zweckmäßigerweise ist der Aufnahmeabschnitt als Absatz gebildet, der sich vom Einstrahlrand der Leucht- und Splitterschutzschicht zum Deckelrand hin erstreckt und auf dem eine bzw. die Leuchteinheit oder LED-Leuchteinheit angeordnet ist. Der Absatz bietet eine zusätzliche Montagehilfe und kann auch den Bauraum in Richtung senkrecht zum Deckel bzw. zu der Scheibe reduzieren.

Die Leuchteinheit kann ein flexibles Band oder eine Leiterplatte mit jeweils daran angeordneten LEDs oder Micro-LEDs umfassen. Die Leuchteinheit kann mittels einer Klebeschicht oder eines Klebebandes an der Deckelinnenseite oder an einer Beschichtung der Deckelinnenseite oder an dem Aufnahmeabschnitt bzw. dem Absatz der Positionierleiste befestigt werden.

Zweckmäßigerweise enthält die Leucht- und Splitterschutzschicht zumindest eine Ausnehmung, Öffnung oder Unterbrechung, in der die Leuchteinheit oder die Positionierleiste an der Deckelinnenseite angeordnet oder befestigt ist. So kann z. B. in einer länglichen Ausnehmung zumindest eine längliche, leisten- oder streifenförmige Leuchteinheit angeordnet sein. Wenn mehrere Öffnungen vorgesehen sind, kann jeweils eine Leuchteinheit in einer der Öffnungen angeordnet sein oder eine Leuchteinheit erstreckt sich über mehrere oder alle Öffnungen und Vorsprünge oder Erhebungen der jeweiligen Leuchteinheit dienen der Anbringung oder Befestigung der Leuchteinheit oder sie enthalten das Leuchtmittel wie z. B. die LEDs, die Licht in die Leucht- und Splitterschutzschicht einstrahlen.

Bevorzugt ist die Leucht- und Splitterschutzschicht an der Scheiben- oder Deckelinnenseite befestigt und insbesondere daran angeklebt oder auflaminiert. Die Leucht- und Splitterschutzschicht kann einteilig oder mehrteilig gebildet sein. So kann insbesondere in einem Randbereich des Deckels neben einer großflächigen zentralen Leucht- und Splitterschutzschicht eine eigene Schicht wie z. B. eine Splitterschutzschicht oder eine Leucht- und Splitterschutzschicht angeordnet sein.

Zweckmäßigerweise ist eine Blende vorgesehen, die den Seitenrand der Leucht- und Splitterschutzschicht und die Leuchteinheit abdeckt. Zusätzlich kann auch die Positionierleiste abgedeckt sein. Die Blende kann auch von der Positionierleiste gebildet sein.

Gemäß einer bevorzugten Ausführungsform ist die Blende beidseits der Leuchteinheit einerseits auswärts der Leuchteinheit auf einem deckelrandnahen Bereich der Leucht- und Splitterschutzschicht und andererseits einwärts der Leuchteinheit an einem deckeleinwärtigen Abschnitt der Leucht- und Splitterschutzschicht befestigt. Die Blende überdeckt damit die Beleuchtungseinrichtung insbesondere in dem Bereich, in dem Streulicht austreten könnte. Daneben bildet die Blende eine optisch ansprechende Abdeckung der darunter angeordneten Funktionsbauteile.

Besonders bevorzugt ist es, wenn der Deckel einen randseitigen Deckelrahmen aufweist und die Positionierleiste mit der Leuchteinheit deckeleinwärts angrenzend angebracht ist und dass eine Blende einerseits über die Leucht- und Splitterschutzschicht an der Deckelinnenseite verklebt ist und andererseits mit dem Deckelrahmen fest verbunden ist. Die Blende, die z. B. ein Bauteil aus festem Kunststoff ist, kann Zugkräfte in Querrichtung von ihrer deckeleinwärtigen Befestigung an der Leucht- und Splitterschutzschicht zu ihrer deckelauswärtigen Befestigung übertragen. Solche Zugkräfte können beispielsweise auftreten, wenn bei einem Unfall ein Fahrzeuginsasse gegen die Scheibe prallt und diese Scheibe splittert, wobei eine an der Leucht- und Splitterschutzschicht auftretende Zugbelastung, die die Leucht- und Splitterschutzschicht zur Deckelmitte hin belastet, über die Blende und ihre jeweilige Befestigung übertragen werden kann.

Demnach überdeckt die Blende die Leuchteinheit und kann zur Deckelmitte hin an der Leucht- und Splitterschutzschicht und zum Deckelaußenrand hin an der Scheibeninnenseite, an der an der Scheibeninnenseite angebrachten Leucht- und Splitterschutzschicht oder an einem scheibenrandseitigen Deckelrahmen befestigt sein. Die Blende übernimmt dabei eine zusätzliche Kraftaufnahme, die eine Ablösung der Leucht- und Splitterschutzschicht von der Scheibe verhindern kann.

Bevorzugt bildet die Scheibe, an deren Scheibeninnenseite die Leucht- und Splitterschutzschicht befestigt und insbesondere angeklebt oder auflaminiert ist, den Deckel des Fahrzeugdaches, der eine Dachöffnung des Fahrzeugdaches schließt.

Nachfolgend wird die Erfindung anhand von Ausführungsbeispielen eines erfindungsgemäßen Deckels unter Bezugnahme auf die Zeichnung näher erläutert. Es zeigt:
- Fig. 1: in einer Querschnittansicht einen Randbereich einer Scheibe eines Deckels eines Fahrzeugdaches mit einer Leucht- und Splitterschutzschicht und seitlicher Lichteinkopplung;
- Fig. 2: in einer Draufsicht die an einer Scheibeninnenseite anbringbare Leucht- und Splitterschutzschicht mit seitlicher Lichteinkopplung;
- Fig. 3: in einer Draufsicht den in einer Dachöffnung angeordneten Deckel;
- Fig. 4: in einer Querschnittansicht in schematischer Darstellung einen Randbereich der Scheibe des Deckels mit einer Ausführungsform der Anordnung der Lichteinstrahlung in die Leucht- und Splitterschutzschicht;
- Fig. 5 bis 18: jeweils in einer Querschnittansicht gemäß Fig. 4 weitere Ausführungsbeispiele der Anordnung der Lichteinstrahlung in die Leuchtund Splitterschutzschicht, wobei die Ausführungsformen der Fig. 6 bis 15 nicht unter den Schutzbereich der Ansprüche fallen;
- Fig. 19: in einer Querschnittansicht gemäß Fig. 1 ein weiteres Ausführungsbeispiel der Anordnung der Lichteinstrahlung in die Leucht- und Splitterschutzschicht und deren Befestigung am Deckel;
- Fig. 20: in einer Draufsicht gemäß Fig. 2 die Leucht- und Splitterschutzschicht des Ausführungsbeispiels der Fig. 19;
- Fig. 21: in einer Querschnittansicht gemäß Fig. 1 ein weiteres Ausführungsbeispiel der Anordnung der Lichteinstrahlung in die Leucht- und Splitterschutzschicht und deren Befestigung am Deckel;
- Fig. 22: in einer Draufsicht gemäß Fig. 2 die Leucht- und Splitterschutzschicht des Ausführungsbeispiels der Fig. 21;
- Fig. 23: in einer Querschnittansicht gemäß Fig. 1 ein weiteres nicht unter den Schutzbereich der Ansprüche fallendes Ausführungsbeispiel der Anordnung der Lichteinstrahlung in die Leucht- und Splitterschutzschicht und deren Befestigung am Deckel;
- Fig. 24: in einer Draufsicht gemäß Fig. 2 die Leucht- und Splitterschutzschicht des Ausführungsbeispiels der Fig. 23; und
- Fig. 25: in einer Querschnittansicht gemäß Fig. 1 ein weiteres Ausführungsbeispiel der Anordnung der Lichteinstrahlung in die Leucht- und Splitterschutzschicht und deren Befestigung am Deckel.

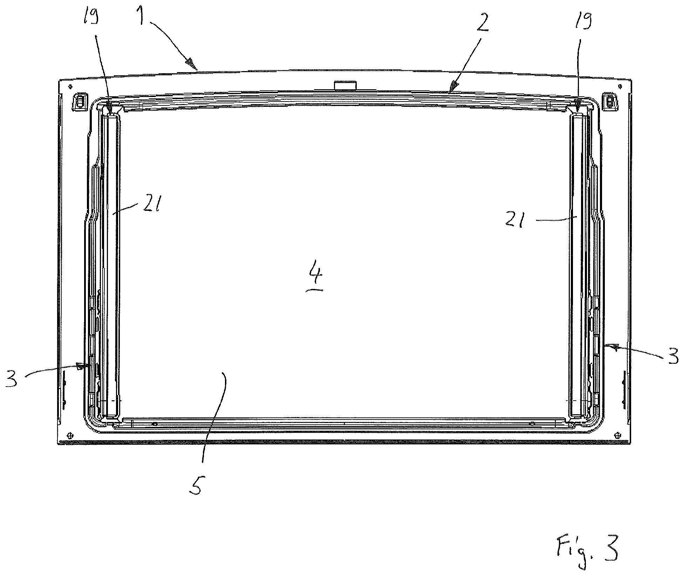

Ein Fahrzeug wie z. B. ein Personenkraftwagen umfasst ein Fahrzeugdach 1 mit einer Dachöffnung 2 (siehe Fig. 3), in der ein mittels einer Lagereinrichtung 3 am Fahrzeugdach 1 bewegbar gelagerter Deckel 4 in Schließstellung angeordnet ist. Der Deckel 4 enthält eine Scheibe 5 aus Glas oder Kunststoff. Der Deckel 4 weist an seiner Innen- oder Unterseite eine Leucht- und Splitterschutzschicht 6 auf, die an der Deckelinnenfläche oder Deckel- oder Scheibeninnenseite 7 angebracht ist, z. B. flächig aufgeklebt oder auflaminiert ist. Die Leucht- und Splitterschutzschicht 6 ist von einer Leucht- und Splitterschutzfolie gebildet und stellt auch eine Leuchtschicht dar.

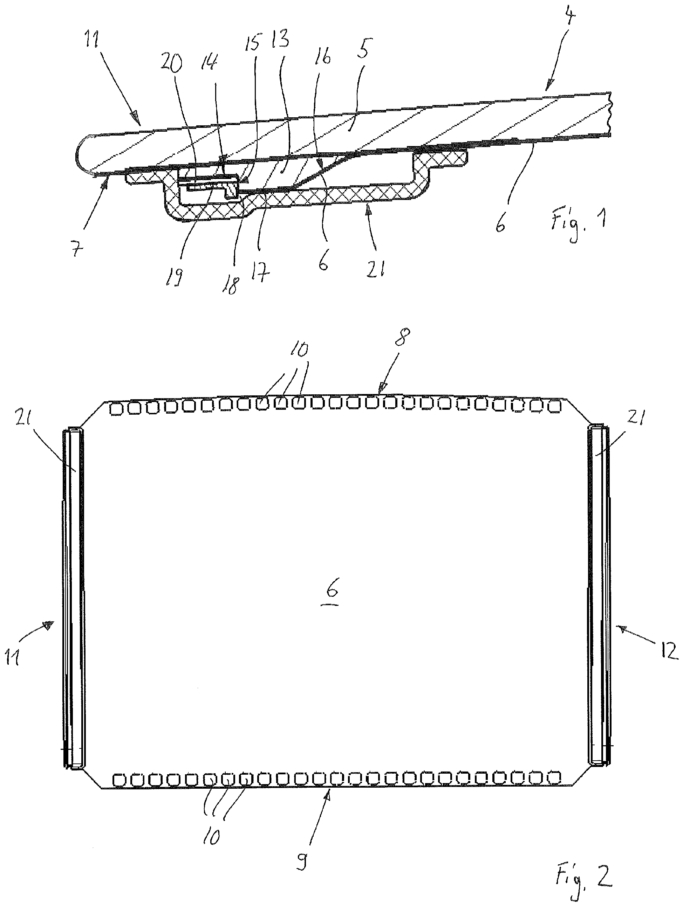

Die Leucht- und Splitterschutzschicht 6 ist zumindest an ihrem Vorderrand 8 (siehe Fig. 2) und an ihrem Hinterrand 9, die dem zugehörigen Vorderrand und Hinterrand des Deckels 4 zugeordnet ist, mit einer Reihe von Öffnungen 10 oder Perforierungen entlang dieser Ränder 8, 9 gebildet, durch die z. B. beim Randumschäumen oder Verkleben des Deckels 4 mit der daran angebrachten Leucht- und Splitterschutzschicht 6 eine zusätzliche sichere Befestigung der Leucht- und Splitterschutzschicht 6 an der Deckelinnenfläche und einem rahmenartigen Deckelinnenblech oder bei einer Festverglasung an dem Dachausschnittsrahmen der Karosserie erfolgen kann.

An der bezüglich der Anordnung des Deckels 4 in seiner Schließstellung am Fahrzeugdach linken und rechten Längs- oder Seitenrand 11 bzw. 12 des Deckels 4 bzw. der Scheibe 5 ist an der Scheibeninnenseite 7 jeweils eine Positionierleiste 13 in der Art eines Längsstreifens angebracht (siehe Fig. 1). Die Positionierleiste 13 weist zum Deckelseitenrand 11 hin einen Absatz 14 mit einer Stirnwand 15 auf. Von der Stirnwand 15 verläuft die Oberfläche der Positionierleiste 13 in Richtung zur Deckelmitte (nach rechts in Fig. 1) und läuft an einem z. B. keilförmigen Abschnitt der Positionierleiste 13 in einer schrägen oder geneigten Übergangsfläche 16 in Richtung zur Deckelmitte hin aus. Die Leucht- und Splitterschutzschicht 6 ist in ihrem Randbereich 17 auf der Übergangsfläche 16 angebracht und erstreckt sich bis zur Stirnwand 15 am Absatz 14 und endet in einer zur Stirnwand 15 parallelen Schnitt- oder Endfläche, die einen Einstrahlrand 18 bildet.

An dem Absatz 14 ist eine Leuchteinheit 19, insbesondere eine LED-Leuchteinheit, die z. B. ein Flexband oder ein PCB-Board aufweist, z. B. mittels eines Klebebandes 20 befestigt. Das Flexband bzw. das PCB-Board trägt eine Vielzahl in einer Reihe angeordneter LEDs oder Mikro-LEDs, die mit Hilfe des Flexbandes bzw. des PCB-Boards derart unmittelbar an der Schnitt- oder Endfläche bzw. dem Einstrahlrand 18 der Leucht- und Splitterschutzschicht 6 angebracht sind, dass von ihnen ausgesandtes Licht in die Leucht- und Splitterschutzschicht 6 eingestrahlt wird. Die Dicke oder Bauhöhe der Positionierleiste 13 wird von der Bauhöhe des Flexbandes bzw. des PCB-Boards mit den LEDs und des dafür erforderlichen Anbringungsraumes bestimmt. Die Übergangsfläche 16 dient dazu, einen sanften knickfreien Übergang der Leucht- und Splitterschutzschicht 6 von der Scheibeninnenseite 7 zur Endposition an der Stirnwand 15 des Absatzes 14 zu schaffen.

Die Leucht- und Splitterschutzschicht 6 hat neben ihrer Funktion des Insassenschutzes bei splitterndem Glas auch noch die Funktion einer Beleuchtung, indem sie das eingestrahlte Licht über ihre Fläche in den Fahrzeuginnenraum abstrahlt. Durch die beiden randseitigen Beleuchtungseinrichtungen bzw. Leuchteinheiten 19 wird Licht an den beiden seitlichen Einstrahlrändern 18 der Leucht- und Splitterschutzschicht 6 eingestrahlt.

Eine Blende 21 deckt die Positionierleiste 13 mit der daran angebrachten LED-Leuchteinheit 19 ab. Die Blende 21 ist z. B. beidseits neben der Positionierleiste 13 an der Deckel- oder Scheibeninnenseite 7 oder der Leucht- und Splitterschutzschicht 6 befestigt. Die Blende 21 schirmt somit an der Lichteinstrahlung austretendes Streulicht ab und verbessert den optischen Eindruck der Deckelunterseite für Fahrzeuginsassen.

Die LEDs oder Micro-LEDs haben einen Lichtaustritt von z. B. 0,8 mm und die Leucht- und Splitterschutzschicht 6 weist eine Dicke von z. B. 0,15 mm bis 0,75 mm und insbesondere etwa 0,2 mm bis 0,5 mm auf. Die LEDs können mit Hilfe eines Ankopplungsmittels an die Leucht- und Splitterschutzschicht 6 angekoppelt werden, wodurch die Lichteinstrahlung mit geringeren Verlusten und damit verbessert erfolgen kann. Ein Ankopplungsmittel ist z. B. ein transparenter Klebstoff oder dergleichen.

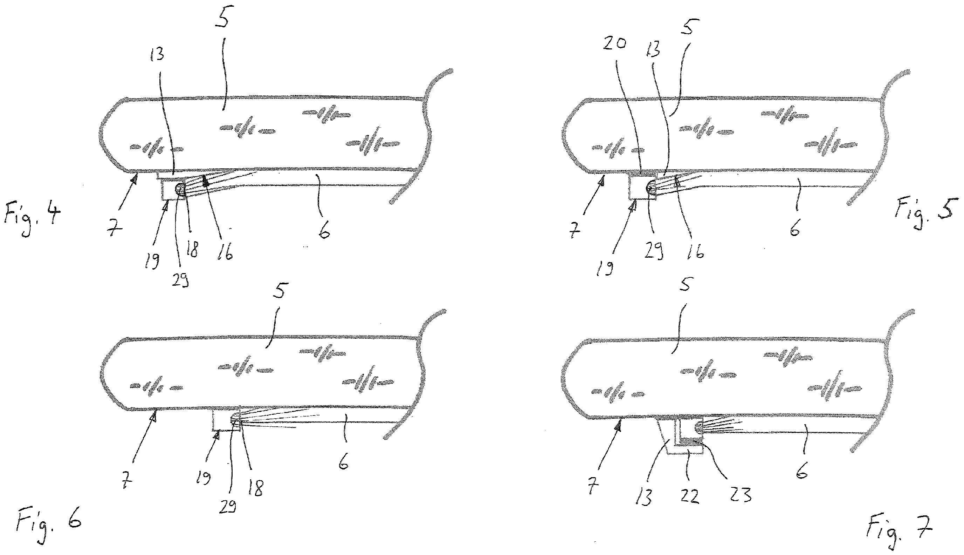

Die Fig. 4 bis 16 zeigen jeweils den seitlichen Randbereich der Scheibe 5 mit der Anordnung der LED-Leuchteinheit 19, wobei die Ausführungsformen der Fig. 6 bis 15 nicht unter den Schutzbereich der Ansprüche fallen. Die Leucht- und Splitterschutzschicht 6 bzw. die Leucht- und Splitterschutzfolie wird nachfolgend verkürzt als Splitterschutzschicht bezeichnet.

Bei der Scheibe 5 der Fig. 4 ist an der Deckel- oder Scheibenunterseite oder Scheibeninnenseite 7 eine Positionierleiste 13 angebracht, die zum Scheibenrand hin eine ebene basisparallele Oberseite, auf der die LED-Leuchteinheit 19 befestigt ist, und eine zur Scheibenmitte hin verlaufende schräge oder geneigte Übergangsfläche 16 an einem keilförmigen Abschnitt der Positionierleiste 13 aufweist, auf der die Splitterschutzschicht 6 mit ihrem Randbereich 17 befestigt ist. Die LED-Leuchteinheit 19 grenzt unmittelbar an die von der Schnitt- oder Endfläche gebildete Einstrahlkante 18 der Splitterschutzschicht 6 an, so dass die LEDs 29 der LED-Leuchteinheit 19 Licht direkt in die Splitterschutzschicht 6 einstrahlen können.

Bei der Scheibe der Fig. 5 ist die LED-Leuchteinheit 19 an der Deckel- oder Scheibenunterseite 7 mittels der Klebeschicht 20 befestigt. Die Positionierleiste 13 ist ausschließlich als Keil mit der geneigten Übergangsfläche 16 gebildet und deckeleinwärts unmittelbar neben der LED-Leuchteinheit 19 angebracht. Die Splitterschutzschicht 6 ist mit ihrem Endbereich auf der Übergangsfläche 16 der Positionierleiste 13 befestigt und ist damit auf ein der LED-Leuchteinheit 19 zugeordnetes Einstrahlniveau gebracht.

Die Fig. 6 zeigt eine Scheibe 5, bei der die LED-Leuchteinheit 19 auf der Scheibeninnenseite 7 angebracht ist und die Splitterschutzschicht 6 auf der Scheibeninnenseite 7 befestigt ist und an die Einstrahlkante 18 angrenzt.

Bei der Scheibe 5 der Fig. 7 ist die Splitterschutzschicht 6 auch mit ihrem Randbereich 17 flächig auf der Scheibeninnenseite 7 angebracht. Eine Positionierleiste 13 ist an der Scheibeninnenseite 7 seitlich neben dem Rand der Splitterschutzschicht 6 aufgeklebt. Die Positionierleiste 13 enthält einen Halteschenkel 22, der die LED-Leuchteinheit 19 in der korrekten Position am Einstrahlrand 18 der Splitterschutzschicht 6 hält. Die LED-Leuchteinheit 19 kann lediglich geklemmt werden oder sie ist mittels einer Klebeschicht 23 an dem Halteschenkel 22 der Positionierleiste 13 und/oder der Deckelinnenseite 7 festgeklebt.

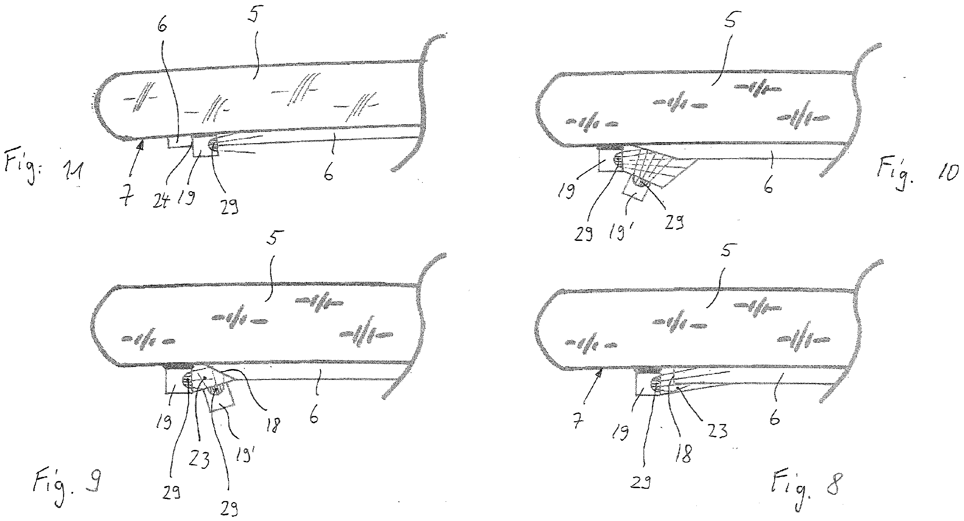

Bei der Scheibe der Fig. 8 ist die Splitterschutzschicht 6 gleichfalls mit ihrem Endbereich flächig auf der Scheibeninnenseite 7 angebracht. Die LED-Leuchteinheit 19 ist mit geringem Abstand von der Einstrahlkante 18 der Splitterschutzschicht 6 angeklebt. Ein optisches Element 23 verbindet die LED-Leuchteinheit 19 mit der Splitterschutzschicht 6 und verbessert die Einstrahlung von aus den LEDs 29 ausgesendetem Licht. Das optische Element 23 ist z. B. ein transparenter Kunststoff, mit dem der Abstand ausgefüllt oder ausgegossen wird. Der Kunststoff des optischen Elements 23 leitet das Licht zur Splitterschutzschicht 6 und reduziert Lichtstreuverluste.

Die Scheibe der Fig. 9 ist eine Abwandlung der Scheibe der Fig. 8, wobei die Splitterschutzschicht 6 eine keilförmig abgeschrägte Einstrahlkante 18 aufweist und der Abstand zwischen der Splitterschutzschicht 6 und der LED-Leuchteinheit 19 mit dem optischen Element 23 ausgefüllt ist. Zusätzlich zu der LED-Leuchteinheit 19 ist eine zweite LED-Leuchteinheit 19' vorgesehen, die auf dem optischen Element 23 angeordnet ist, wobei die LEDs 29 der beiden LED-Leuchteinheiten 19, 19' insbesondere gegen einander versetzt angeordnet sind. Aufgrund der zwei LED-Leuchteinheiten 19 und 19' kann die Lichteinstrahlung wesentlich erhöht werden. Die zweite LED-Leuchteinheit 19' kann beim Vergießen des optischen Elements 23 von diesem befestigt werden oder wird von einer nicht dargestellten Halterung gehalten.

Die Scheibe 5 der Fig. 10 weist gegenüber der Scheibe der Fig. 9 eine geänderte Anordnung der zweiten LED-Leuchteinheit 19' mit entsprechend abgeänderter Richtung der Lichtausstrahlung auf. Das optische Element 23 ist dementsprechend größer gestaltet.

Bei der Scheibe 5 der Fig. 11 ist die Splitterschutzschicht 6 gleichfalls mit ihrem Randbereich 17 flächig auf der Scheibeninnenseite 7 angebracht. Die Splitterschutzschicht 6 enthält nahe ihrem Randbereich 17 und parallel zum ihrem Einstrahlrand 18 mehrere Ausnehmungen oder Löcher 24, in denen jeweils LED-Leuchteinheiten 19 angeordnet sind.

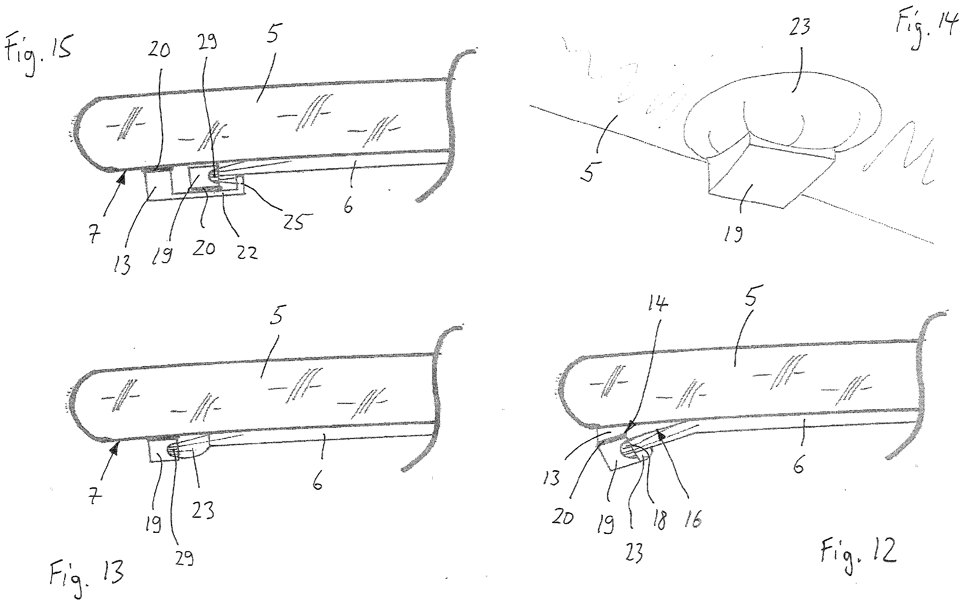

Bei der Scheibe 5 der Fig. 12 ist an der Scheibeninnenseite 7 eine Positionierleiste 13 angebracht, die einen zur Scheibenmitte hin gerichteten keilförmigen Abschnitt mit einer geneigten Übergangsfläche 16 sowie einen Absatz 14 zur Befestigung der LED-Leuchteinheit 19 aufweist. Die Befestigungsfläche des Absatzes 14 ist parallel zur geneigten Übergangsfläche 16 ausgerichtet und die Einstrahlkante 18 der Splitterschutzschicht 6 ist senkrecht zur Übergangsfläche 16 ausgerichtet, so dass die LEDs 29 ihr Licht in optimaler Ausrichtung in die Splitterschutzschicht 6 einstrahlen können. Ein optisches Element 23 wie z. B. ein Gießharzstrang kann die Lichteinleitung verbessern und Streulicht reduzieren.

Die Scheibe 5 der Fig. 13 weist eine Ankopplung der LED-Leuchteinheit 19 mit einem optischen Element 23 gemäß Fig. 8 auf. Fig. 14 zeigt eine räumliche Draufsicht auf die LED-Leuchteinheit 19 mit Gießharz als optischem Element 23.

Die Scheibe 5 der Fig. 15 wandelt die Anordnung der Scheibe 5 der Fig. 7 dahin gehend ab, dass der Halteschenkel 22 der Positionierleiste 13 zur Splitterschutzschicht 6 hin verlängert ist und mit einem Anlagesteg 25 an der Oberfläche der Splitterschutzschicht 6 anliegt. Die Positionierleiste 13 übergreift somit die LED-Leuchteinheit 19 vollständig und bildet eine lichtdichte Kapselung der LED-Leuchteinheit 19 in der Art einer Blende.

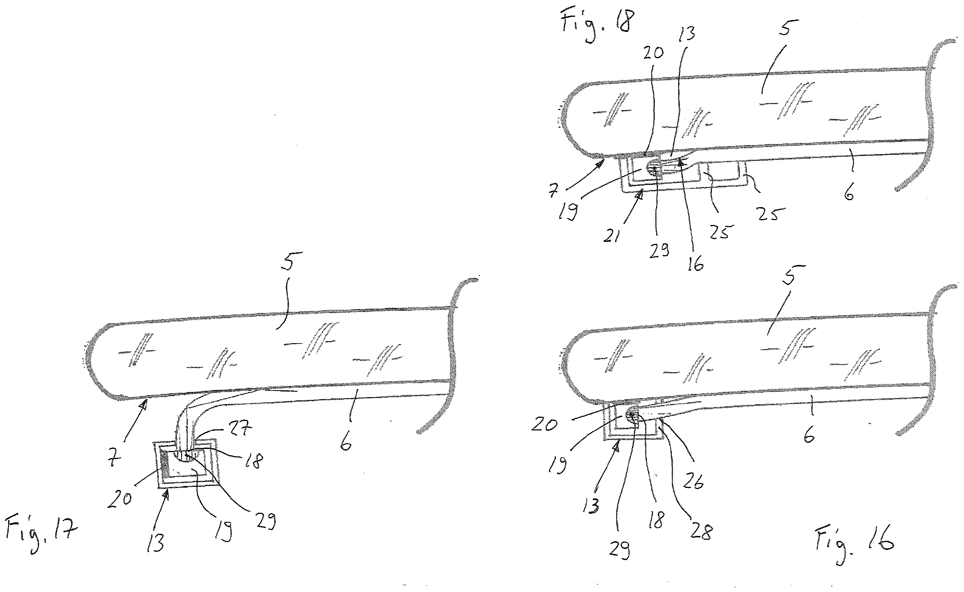

Bei der Scheibe 5 der Fig. 16 ist eine Positionierleiste 13 vorgesehen, die ein U-förmiges blendenartiges Abdeckprofil darstellt und einen Schlitz 26 aufweist, der an dem zur Scheibenmitte hin gerichtete Schenkel 28 der Positionierleiste 13 gebildet ist und durch den sich der Randbereich der Splitterschutzschicht 6 erstreckt. Der Schlitz 26 ist von der Scheibeninnenseite 7 derart beabstandet, dass der Randbereich der Splitterschutzschicht 6 von der Scheibeninnenseite 7 abgehoben ist und die Einstrahlkante 18 den LEDs 29 der LED-Leuchteinheit 19 korrekt zugeordnet ist.

Bei der Scheibe 5 der Fig. 17 ist die Positionierleiste 13 als geschlossenes Hohlprofil gebildet, in dem die LED-Leuchteinheit 19 angeordnet und mittels einer Klebeschicht 20 derart befestigt ist, dass die LEDs 29 ihr Licht in Richtung zu einem Schlitz 27 in dem Hohlprofil strahlen, durch den der Randbereich der Splitterschutzschicht 6 gesteckt ist. Die Einstrahlkante 18 liegt plan an den LEDs 29 an. Die Splitterschutzschicht 6 ist in ihrem weiteren Randbereich nicht an der Scheibeninnenseite 7 verklebt, so dass die Positionierleiste 13 derart mit Abstand von der Scheibeninnenseite 7 positioniert werden kann, dass die Splitterschutzschicht 6 z. B. um einen Winkel von etwa 90° von der Deckelinnenseite 7 nach unten gebogen verlaufen kann. Die Positionierleiste 13 kann für ihre eigene Anbringung am Deckel 4 z. B. an einem PU-Rahmen der Scheibe 5 angeschäumt werden.

Bei der Scheibe 5 der Fig. 18 ist eine LED-Leuchteinheit 19 unmittelbar neben einer keilförmigen Positionierleiste 13 an der Deckelinnenseite 7 befestigt. Die Splitterschutzschicht 6 ist auf der geneigten Übergangsfläche 16 der Positionierleiste 13 angebracht und grenzt unmittelbar an die LEDs 29 an. Eine Positionier- oder Abdeckleiste ist als Blende 21 ähnlich der Positionierleiste 13 der Fig. 15 gebildet, weist jedoch zwei nebeneinander verlaufende Anlagestege 25 auf, die die lichtdichte Abdeckung verbessern.

Die in den Figuren 4 bis 18 dargestellten Scheiben können auch Blenden enthalten, die die LED-Leuchteinheiten 19 und die Positionierleisten 13 abdecken.

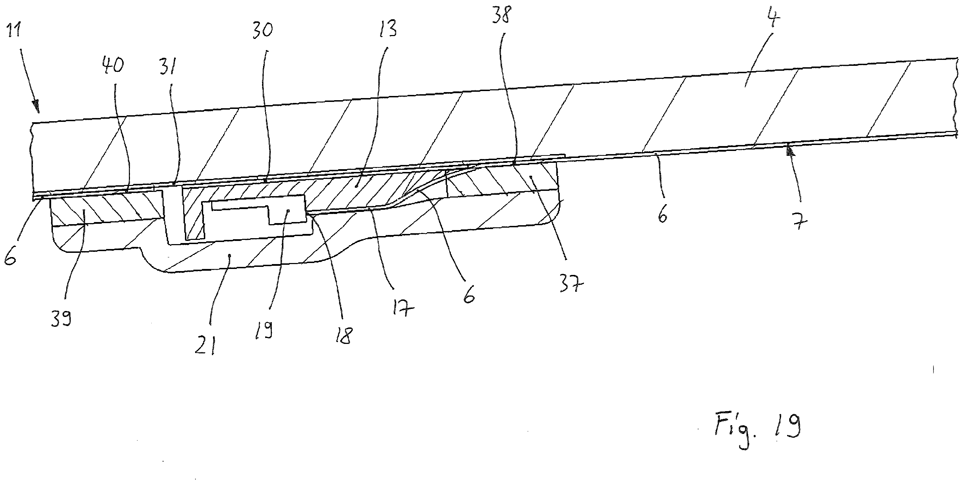

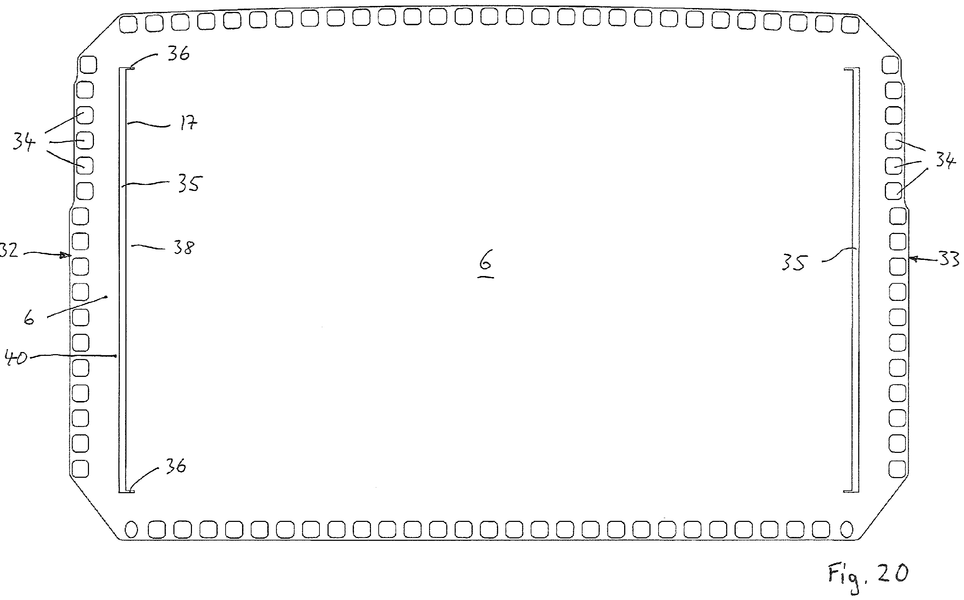

Bei dem in den Fig. 19 und 20 dargestellten Ausführungsbeispiel ist die Positionierleiste 13 mittels einer Klebeschicht oder eines Klebebandes 30 auf einer z. B. als Schwarzdruck gebildeten Glasfritte 31 befestigt, die an der Deckel- oder Scheibeninnenseite 7 entlang des Seitenrandes 11 in einer solchen Breite in Scheibenquerrichtung angeordnet ist, dass sie die die LED-Leuchteinheit 19, die Positionierleiste 13 und die Blende 21 umfassende Anordnung zur transparenten Scheibe 5 hin vollständig abdeckt.

Die zugehörige Leucht- und Splitterschutzschicht 6 (siehe Fig. 20) enthält an ihrem linken Seitenrand 32 und an ihrem gegenüber liegenden rechten Seitenrand 33 jeweils eine Reihe von Öffnungen 34 oder Perforierungen entsprechend den Öffnungen 10 an ihrem Vorderrand 8 und Hinterrand 9, durch die eine am Deckel 4 bzw. der Scheibe 5 angebrachte Randumschäumung eine zusätzliche sichere Befestigung der Leucht- und Splitterschutzschicht 6 an der Deckelinnenfläche oder Scheibeninnenseite 7 und - falls vorhanden - an einem Deckelrahmen oder rahmenartigen Deckelinnenblech erfolgen kann.

Die Leucht- und Splitterschutzschicht 6 enthält des Weiteren einwärts vom jeweiligen Seitenrand 32 bzw. 33 und zu diesem parallel eine längliche Ausnehmung 35, die in der Länge der zugeordneten Positionierleiste 13 bzw. LED-Leuchteinheit 19 gebildet ist. An den beiden Enden der länglichen Ausnehmung 35 enthält die Leucht- und Splitterschutzschicht 6 zwei Quertrennschnitte 36, die den Randbereich 17 der Leucht- und Splitterschutzschicht 6 an diesen beiden Enden von der Leucht- und Splitterschutzschicht 6 abtrennt, so dass dieser Randbereich 17 auf die Positionierleiste 13 aufgelegt und daran befestigt werden kann (entsprechend dem in Fig. 1 dargestellten ersten Ausführungsbeispiel).

Die Blende 21, die z. B. aus einem Kunststoff hergestellt ist, ist einerseits mit einem Klebeband oder Schaumklebeband 37 an einem inneren Streifenabschnitt 38 der Leucht- und Splitterschutzschicht 6, an dem sie einwärts der Positionierleiste 13 mit der Scheibe 5 fest verbunden ist, und andererseits mit einem Klebeband oder Schaumklebeband 39 an einem äußeren Streifenabschnitt 40 der Leucht- und Splitterschutzschicht 6, an dem diese auswärts der Positionierleiste 13 mit der Scheibe 5 fest verbunden ist, befestigt.

Die beiden Klebebänder oder Schaumklebebänder 37 und 39 halten über ihre Klebeverbindungen die Blende 21 sehr fest an der Leucht- und Splitterschutzschicht 6 und damit an der Scheibe 5. Sollte bei einem Unfall ein Fahrzeuginsasse gegen die Scheibe 5 prallen und diese splittern, so wird eine an der Leucht- und Splitterschutzschicht 6 auftretende Zugbelastung, die die Leucht- und Splitterschutzschicht 6 von der Positionierleiste 13 einwärts zur Deckelmitte hin belastet, über die Blende 21 und die beiden Klebebänder oder Schaumklebebänder 37 und 39 auf den äußeren Streifenabschnitt 40 der Leucht- und Splitterschutzschicht 6 übertragen. Dieser äußere Streifenabschnitt 40 der Leucht- und Splitterschutzschicht 6, der in diesem Bereich angrenzend an die Randumschäumung an den Ausnehmungen 34 besonders fest an der Scheibe 5 befestigt ist, erhöht somit die Abreißfestigkeit der an der Scheibe 5 fest verbundenen Leucht- und Splitterschutzschicht 6.

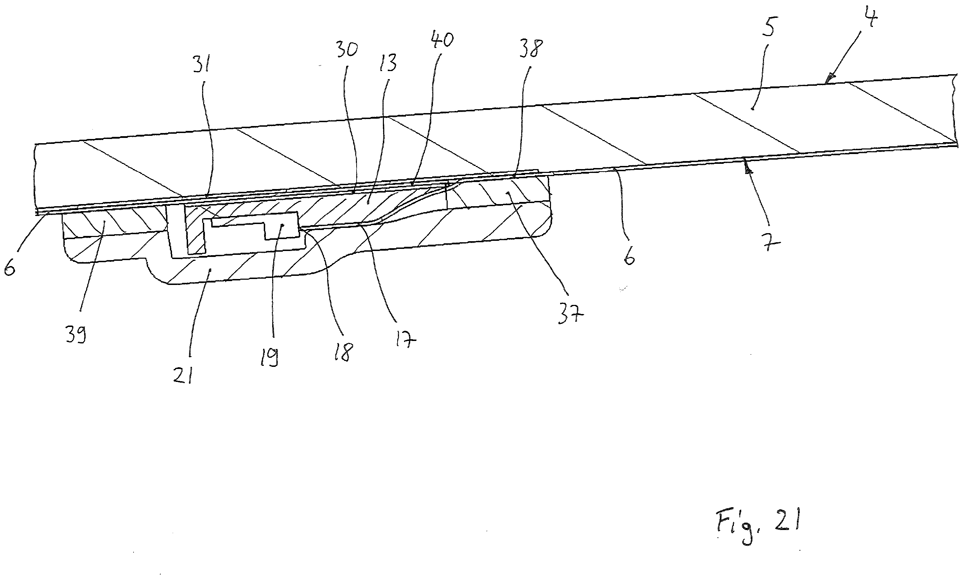

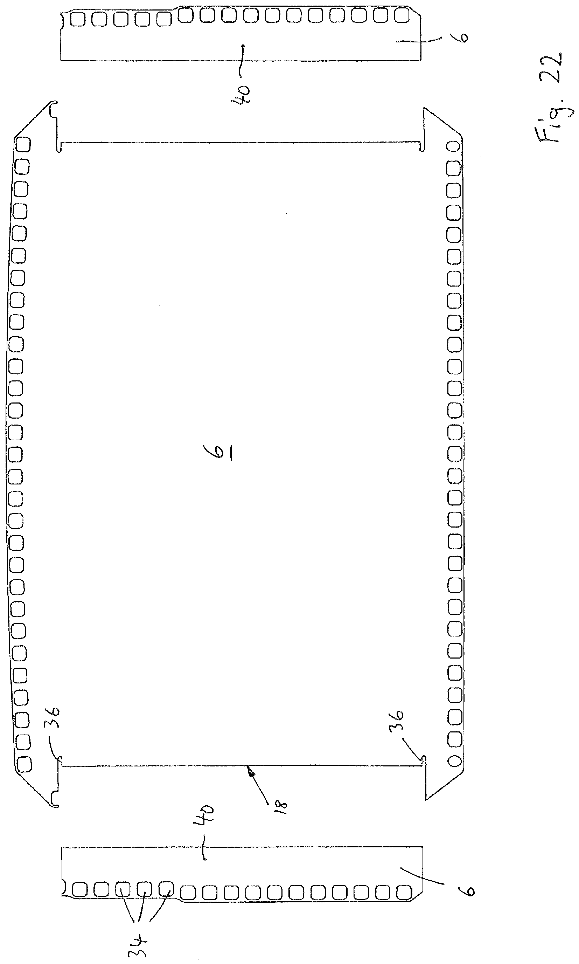

Das in den Fig. 21 und 22 dargestellte Ausführungsbeispiel stellt eine Abwandlung des in den Fig. 19 und 20 dargestellten Ausführungsbeispiels dar. Der äußere Streifenabschnitt 40 der Leucht- und Splitterschutzschicht 6 ist in Querrichtung oder y-Richtung breiter als der in den Fig. 19 und 20 dargestellte äußere Streifenabschnitt 40 und ist auf der Scheibeninnenseite 7, beispielsweise im Bereich der Glasfritte 31, derart aufgebracht, dass er eine Zwischenlage bei der Befestigung der Positionierleiste 13 mittels des Klebebandes 30 bildet. Der äußere Streifenabschnitt 40 ist über seine vergleichsweise große Fläche sehr abziehfest an der Scheibe 5 befestigt oder verklebt. Die Blende 21 ist daher über das äußere Schaumklebeband 39 und den äußeren Streifenabschnitt 40 mit hoher Abziehfestigkeit mit der Scheibe 5 verbunden.

Dieser äußere Streifenabschnitt 40 kann z. B. ein Teil, das von der zur Anbringung an der Scheibe 5 vorgesehenen Leucht- und Splitterschutzschicht 6 abgetrennt ist, oder ein eigenständiges Teil sein.

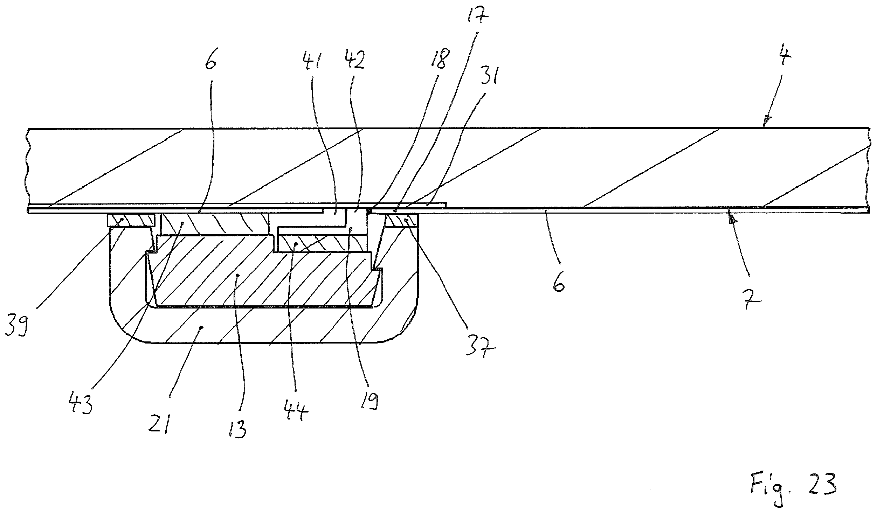

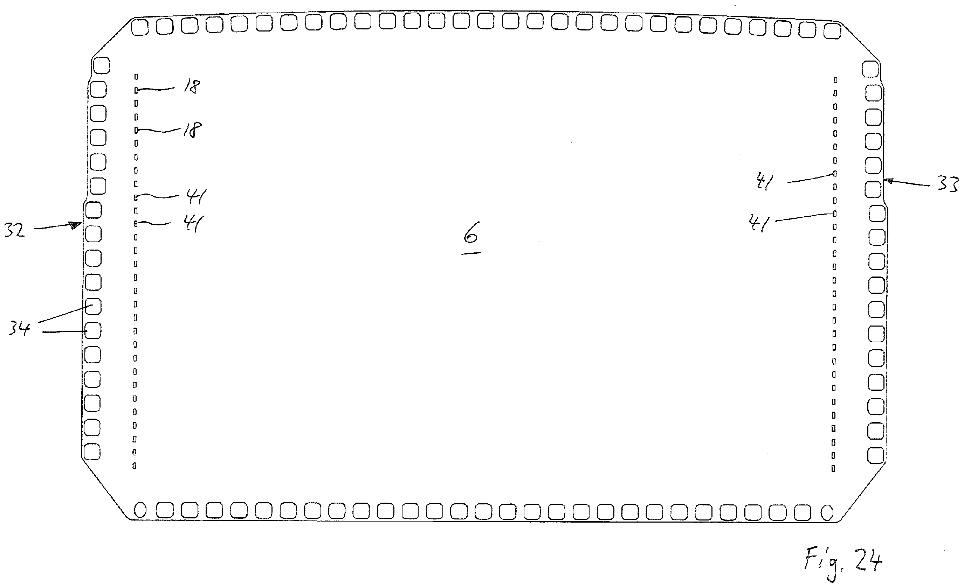

Bei dem in den Fig. 23 und 24 dargestellten Ausführungsbeispiel, das nicht unter den Schutzbereich der Ansprüche fällt, ist die Leucht- und Splitterschutzschicht 6 mit einer Mehrzahl von kleinen Löchern oder Öffnungen 41 gebildet, die voneinander beabstandet in einer Reihe parallel zum linken Seitenrand 32 wie auch zum rechten Seitenrand 33 angeordnet sind. Die band- oder leistenförmige LED-Leuchteinheit 19 der Beleuchtungseinrichtung ist an der Scheibeninnenseite 7 mittels gegen die Scheibeninnenseite 7 vorstehender und den Öffnungen 41 zugeordneter Vorsprünge 42, die jeweils die LEDs 29 enthalten, derart anliegend angeordnet, dass die Leucht- und Splitterschutzschicht 6 unmittelbar an diese Vorsprünge 42 angrenzt und das Licht in die jeweilige Einstrahlkante 18 der Leucht- und Splitterschutzschicht 6 an ihren Öffnungen 41 eingestrahlt werden kann.

Die Befestigung der LED-Leuchteinheit 19 erfolgt mittels einer Positionierleiste 13, die mit einem ersten Schaumklebeband 43 auf der Leucht- und Splitterschutzschicht 6 zum linken Seitenrand 32 hin neben der LED-Leuchteinheit 19 verklebt ist und dazu einwärts benachbart die LED-Leuchteinheit 19 übergreift und mit dieser mit einem zweiten Schaumklebeband 44 fest verbunden ist. Die Positionierleiste 13 hält über ihre feste Verklebung an der der Leucht- und Splitterschutzschicht 6 und damit an der Deckelinnenseite 7 die LED-Leuchteinheit 19 in fester Anlage an der Deckelinnenseite 7, wobei eine eigene Verklebung der LED-Leuchteinheit 19 nicht vorgesehen oder erforderlich ist. Eine Blende 21 überdeckt die Positionierleiste 13 mit der LED-Leuchteinheit 19 und ist entsprechend der in Fig. 19 beschriebenen Ausführungsform mit zwei Schaumklebebändern 37, 39 über die Leucht- und Splitterschutzschicht 6 an der Scheibe 5 befestigt.

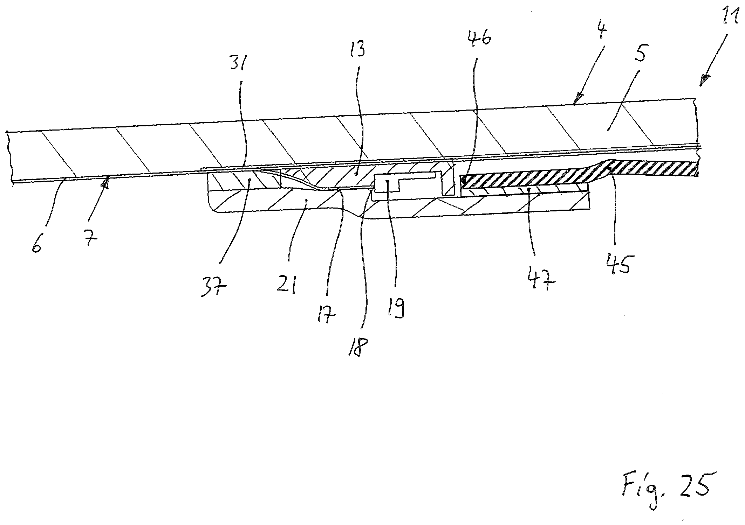

Bei dem in Fig. 25 dargestellten Ausführungsbeispiel enthält der Deckel 4 bzw. die Scheibe 5 einen Deckelrahmen 45, insbesondere ein rahmenartiges Deckelinnenblech, der an der Scheibe 5 zumindest nahe ihres Seitenrandes 11 innen- oder unterseitig z. B. durch Anschäumung befestigt ist. Eine Positionierleiste 13 mit einer darauf angebrachten LED-Leuchteinheit 19 ist einwärts neben einem Innenrand 46 des Deckelrahmens 45 in einer Weise gemäß dem in Fig. 19 dargestellten Ausführungsbeispiel angeordnet und befestigt. Eine die Positionierleiste 13 mit der darauf angebrachten LED-Leuchteinheit 19 überdeckende Blende 21 ist einerseits mit einem inneren Schaumklebeband 37 an dem Streifenabschnitt 38 der Leucht- und Splitterschutzschicht 6 befestigt und andererseits mit dem angrenzenden Deckrahmen 45 fest verbunden, z. B. mittels eines Schaumklebebandes 47, mit PU-Klebstoff, mit einem Acrylklebeband oder mittels weiterer Verklebungsarten. Die Blende 21 ist somit bei Zugbelastung in Richtung zur Deckelmitte hin (wie bei einem Unfall mit Aufprall eines Fahrzeuginsassen, siehe obige Erläuterungen) am Deckelrahmen 45 befestigt und von diesem gegen Verlagerung gehalten.

Grundsätzlich kann an einem Deckel 4 mit einem derartigen Deckelrahmen 45 neben der Beleuchtungseinrichtung gemäß Fig. 25 auch jede der in den Fig. 4 bis 18 dargestellten Beleuchtungseinrichtungen eingesetzt werden und mit dem Deckelrahmen 45 zur Abstützung der Blende 21 verbunden werden.

Die in der Beschreibung und anhand der Ausführungsbeispiele sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Fahrzeugdach | 25 | Anlagesteg |
| 2 | Dachöffnung | 26 | Schlitz |
| 3 | Lagereinrichtung | 27 | Schlitz |
| 4 | Deckel | 28 | Schenkel |
| 5 | Scheibe | 29 | LED |
| 6 | Leucht- und Splitterschutzschicht | 30 | Klebeband |
| | | 31 | Glasfritte |
| 7 | Scheibeninnenseite | 32 | linker Seitenrand |
| 8 | Vorderrand | 33 | rechter Seitenrand |
| 9 | Hinterrand | 34 | Öffnung |
| 10 | Öffnung | 35 | Ausnehmung |
| 11 | Seitenrand | 36 | Quertrennschnitt |
| 12 | Seitenrand | 37 | Schaum klebeband |
| 13 | Positionierleiste | 38 | Streifenabschnitt |
| 14 | Absatz | 39 | Schaumklebeband |
| 15 | Stirnwand | 40 | Streifenabschnitt |
| 16 | Übergangsfläche | 41 | Öffnung |
| 17 | Randbereich | 42 | Vorsprung |
| 18 | Schnitt- oder Endfläche | 43 | Schaumklebeband |
| 19 | LED-Leuchteinheit | 44 | Schaumklebeband |
| 20 | Klebeband | 45 | Deckelrahmen |
| 21 | Blende | 46 | Innenrand |
| 22 | Halteschenkel | 47 | Schaumklebeband |
| 23 | optisches Element | | |
| 24 | Loch | | |

## Patentansprüche

1. Deckel (4) eines Fahrzeugdaches (1), der eine Scheibe (5), eine an der Scheibeninnenseite (7) angeordnete Splitterschutzschicht und eine eine Leuchtschicht aufweisende Beleuchtungseinrichtung aufweist, wobei eine Leucht- und Splitterschutzschicht (6) sowohl die Splitterschutzschicht als auch die Leuchtschicht in dieser einen Schicht bildet,
**dadurch gekennzeichnet,**
**dass** die Beleuchtungseinrichtung zumindest eine Leuchteinheit (19, 19') enthält, die an einem Seitenrandbereich (17) der Leucht- und Splitterschutzschicht (6) zum Einstrahlen von Licht in die Leucht- und Splitterschutzschicht (6) vorgesehen ist, und
**dass** zumindest eine Positionierleiste (13) für die Befestigung der Leuchteinheit (19) und/oder für die Zuordnung der Leuchteinheit (19) zu einem Einstrahlrand (18) der Leucht- und Splitterschutzschicht (6) vorgesehen ist, wobei die Leucht- und Splitterschutzschicht (6) von einer Leucht- und Splitterschutzfolie gebildet ist, die an, auf oder in dieser Positionierleiste (13) mit ihrem den Einstrahlrand (18) enthaltenden Randbereich (17) mit Abstand zur Deckelinnenseite (7) angeordnet ist.

2. Deckel nach Anspruch 1,
**dadurch gekennzeichnet, dass** die Leucht- und Splitterschutzschicht (6) eine Dicke von etwa 0,15 mm bis 0,75 mm und insbesondere von etwa 0,2 mm bis 0,5 mm aufweist und insbesondere von einer Splitterschutzfolie aus Polyethylenterephthalat (PET) mit einer Dicke von 0,2 mm gebildet ist.

3. Deckel nach Anspruch 1 oder 2,
**dadurch gekennzeichnet, dass** die Leuchteinheit (19) LEDs (29) oder Micro-LEDs enthält, die an einem Einstrahlrand (18) der Leucht- und Splitterschutzschicht (6) entlang dem Seitenrand (11) des Deckels (4) angeordnet sind.

4. Deckel nach einem der Ansprüche 1 bis 3,
**dadurch gekennzeichnet, dass** die Positionierleiste (13) an der Deckelinnenseite (7) angebracht ist und die Leucht- und Splitterschutzschicht (6) auf dieser Positionierleiste (13) mit ihrem den Einstrahlrand (18) enthaltenden Randbereich (17) mit Abstand zur Deckelinnenseite (7) angeordnet ist.

5. Deckel nach einem der Ansprüche 1 bis 4,
**dadurch gekennzeichnet, dass** die Positionierleiste (13) eine Innen- oder Unterseite, mit der sie an der Deckelinnenseite (7) angeordnet ist, und eine gegenüber liegende Außen- oder Oberseite aufweist, die die Leucht- und Splitterschutzschicht (6) mit ihrem den Einstrahlrand (18) enthaltenden Randbereich (17) mit Abstand zur Deckelinnenseite (7) trägt, wobei die Außen- oder Oberseite eine geneigte Übergangsfläche (16) aufweist, die zur Deckelmitte hin in einer keilförmigen Spitze der Positionierleiste (13) ausläuft und eine kontinuierliche Befestigungsunterlage für die Leucht- und Splitterschutzschicht (6) bildet.

6. Deckel nach einem der Ansprüche 1 bis 5,
**dadurch gekennzeichnet, dass** die Positionierleiste (13) einen Aufnahmeabschnitt aufweist, an dem die Leuchteinheit (19) in Zuordnung zu der Leucht- und Splitterschutzschicht (6) anbringbar ist.

7. Deckel nach Anspruch 6,
**dadurch gekennzeichnet, dass** der Aufnahmeabschnitt als Absatz (14) gebildet ist, der sich vom Einstrahlrand (18) der Leucht- und Splitterschutzschicht (6) zum Seitenrand (11) des Deckels (4) hin erstreckt und auf dem eine bzw. die Leuchteinheit (19) angeordnet ist.

8. Deckel nach einem der Ansprüche 1 bis 7,
**dadurch gekennzeichnet, dass** die Leuchteinheit (19), die insbesondere ein flexibles Band oder eine Leiterplatte mit jeweils daran angeordneten LEDs (29) oder Mikro-LEDs umfasst, mittels einer Klebeschicht oder eines Klebebandes (20) an der Deckelinnenseite (7) oder an der Positionierleiste (13) befestigt ist.

9. Deckel nach einem der Ansprüche 1 bis 8,
**dadurch gekennzeichnet, dass** die Leucht- und Splitterschutzschicht (6) zumindest eine Ausnehmung (35, 41) oder Unterbrechung aufweist, in der die Leuchteinheit (19) oder die Positionierleiste (13) an der Deckelinnenseite (7) angeordnet oder befestigt ist.

10. Deckel nach einem der Ansprüche 1 bis 9,
**dadurch gekennzeichnet, dass** die Leucht- und Splitterschutzschicht (6) an der Deckelinnenseite (7) befestigt und insbesondere angeklebt oder auflaminiert ist.

11. Deckel nach einem der Ansprüche 1 bis 10,
**dadurch gekennzeichnet, dass** eine Blende (21) zumindest die Leuchteinheit (19) und den Seitenrand der Leucht- und Splitterschutzschicht (6) und insbesondere auch die Positionierleiste (13) abdeckt.

12. Deckel nach Anspruch 11,
**dadurch gekennzeichnet, dass** die Blende (21) beidseits der Leuchteinheit (19) einerseits auswärts der Leuchteinheit (19) auf einem deckelrandnahen Bereich der Leucht- und Splitterschutzschicht (6) und andererseits einwärts der Leuchteinheit (19) an einem deckeleinwärtigen Abschnitt der der Leucht- und Splitterschutzschicht (6) befestigt ist.

13. Deckel nach einem der Ansprüche 1 bis 8,
**dadurch gekennzeichnet, dass** der Deckel (4) einen randseitigen Deckelrahmen (45) aufweist und die Positionierleiste (13) mit der Leuchteinheit (19) deckeleinwärts angrenzend angebracht ist und dass eine Blende (21) einerseits über die Leucht- und Splitterschutzschicht (6) an der Deckelinnenseite (7) verklebt ist und andererseits mit dem Deckelrahmen (45) fest verbunden ist.

14. Deckel nach einem der Ansprüche 11 bis 13,
**dadurch gekennzeichnet, dass** die Blende (21) die Leuchteinheit (19) überdeckt und zur Deckelmitte hin an der Leucht- und Splitterschutzschicht (6) und zum Deckelaußenrand hin an der Scheibeninnenseite (7), an der an der Scheibeninnenseite (7) angebrachten Leucht- und Splitterschutzschicht (6) oder an einem scheibenrandseitigen Deckelrahmen (45) befestigt ist.

15. Deckel nach einem der Ansprüche 1 bis 14,
**dadurch gekennzeichnet, dass** die Scheibe (5), an deren Scheibeninnenseite (7) die Leucht- und Splitterschutzschicht (6) befestigt und insbesondere angeklebt oder auflaminiert ist, den Deckel (4) des Fahrzeugdaches bildet, der eine Dachöffnung des Fahrzeugdaches schließt.

## Claims

1. Cover (4) of a vehicle roof (1), having a pane (5), a splinter protection layer arranged at the pane inner side (7) and an illumination device having a light-emitting layer, wherein a light-emitting and splinter protection layer (6) forms both the splinter protection layer and the light-emitting layer in said one layer,
**characterized**
**in that** the illumination device contains at least one light-emitting unit (19, 19') provided at a side peripheral region (17) of the light-emitting and splinter protection layer (6) for radiating light into the light-emitting and splinter protection layer (6),
and
**in that** at least one positioning bar (13) for the attachment of the light-emitting unit (19) and/or for the assignment of the light-emitting unit (19) to an irradiation periphery (18) of the light-emitting and splinter protection layer (6) is provided, wherein the light-emitting and splinter protection layer (6) is formed by a light-emitting and splinter protection film that is arranged with its peripheral region (17) containing the irradiation periphery (18) at, on or in said positioning bar (13), at a distance from the cover inner side (7).

2. Cover according to Claim 1,
**characterized in that** the light-emitting and splinter protection layer (6) has a thickness of approximately 0.15 mm to 0.75 mm and in particular of approximately 0.2 mm to 0.5 mm and in particular is formed by a splinter protection film made of polyethylene terephthalate (PET) having a thickness of 0.2 mm.

3. Cover according to Claim 1 or 2,
**characterized in that** the light-emitting unit (19) contains LEDs (29) or micro-LEDs that are arranged at an irradiation periphery (18) of the light-emitting and splinter protection layer (6) along the side periphery (11) of the cover (4).

4. Cover according to one of Claims 1 to 3,
**characterized in that** the positioning bar (13) is attached to the cover inner side (7) and the light-emitting and splinter protection layer (6) is arranged with its peripheral region (17) containing the irradiation periphery (18) on said positioning bar (13) at a distance from the cover inner side (7).

5. Cover according to one of Claims 1 to 4,
**characterized in that** the positioning bar (13) has an inner or lower side, by way of which said positioning bar is arranged at the cover inner side (7), and, located opposite thereto, an outer or upper side carrying the light-emitting and splinter protection layer (6) with its peripheral region (17) containing the irradiation periphery (18) at a distance from the cover inner side (7),
wherein the outer or upper side has an inclined transition surface (16) that tapers towards the cover centre in a wedge-shaped point of the positioning bar (13) and forms a continuous attachment base for the light-emitting and splinter protection layer (6).

6. Cover according to one of Claims 1 to 5,
**characterized in that** the positioning bar (13) has a receiving portion to which the light-emitting unit (19) is attachable with assignment to the light-emitting and splinter protection layer (6).

7. Cover according to Claim 6,
**characterized in that** the receiving portion is formed as a shoulder (14) that extends from the irradiation periphery (18) of the light-emitting and splinter protection layer (6) up to the side periphery (11) of the cover (4) and on which a, or the, light-emitting unit (19) is arranged.

8. Cover according to one of Claims 1 to 7,
**characterized in that** the light-emitting unit (19), which in particular comprises a flexible strip or a printed circuit board with LEDs (29) or micro-LEDs that are in each case arranged thereon, is attached to the cover inner side (7) or to the positioning bar (13) by means of an adhesive layer or an adhesive tape (20).

9. Cover according to one of Claims 1 to 8,
**characterized in that** the light-emitting and splinter protection layer (6) has at least one recess (35, 41) or discontinuity in which the light-emitting unit (19) or the positioning bar (13) is arranged or attached at or to the cover inner side (7).

10. Cover according to one of Claims 1 to 9,
**characterized in that** the light-emitting and splinter protection layer (6) is attached, and in particular adhesively bonded or laminated, to the cover inner side (7) .

11. Cover according to one of Claims 1 to 10,
**characterized in that** a screen (21) covers at least the light-emitting unit (19) and the side periphery of the light-emitting and splinter protection layer (6) and in particular also the positioning bar (13).

12. Cover according to Claim 11,
**characterized in that** the screen (21) is attached outwardly of the light-emitting unit (19) on a region of the light-emitting and splinter protection layer (6) that is near the cover periphery and also inwardly of the light-emitting unit (19) at a portion of the light-emitting and splinter protection layer (6) that is located inwardly of the cover.

13. Cover according to one of Claims 1 to 8,
**characterized in that** the cover (4) has a peripheral cover frame (45) and the positioning bar (13) is attached with the light-emitting unit (19) adjoining inwardly of the cover, and **in that** a screen (21) is adhesively bonded to the cover inner side (7) via the light-emitting and splinter protection layer (6) and also fixedly connected to the cover frame (45).

14. Cover according to one of Claims 11 to 13,
**characterized in that** the screen (21) covers the light-emitting unit (19) and is attached towards the cover centre to the light-emitting and splinter protection layer (6) and towards the cover outer periphery to the pane inner side (7), to the light-emitting and splinter protection layer (6) attached to the pane inner side (7) or to a cover frame (45) located on the pane periphery side.

15. Cover according to one of Claims 1 to 14,
**characterized in that** the pane (5) to whose pane inner side (7) the light-emitting and splinter protection layer (6) is attached and in particular is adhesively bonded or laminated, forms the cover (4) of the vehicle roof that closes a roof opening in the vehicle roof.

## Revendications

1. Capot (4) d'un toit de véhicule (1), lequel capot comporte une vitre (5), une couche anti-éclats disposée du côté intérieur (7) de la vitre et un dispositif d'éclairage comportant une couche lumineuse, une couche lumineuse et anti-éclats (6) formant à la fois la couche anti-éclats et la couche lumineuse dans cette couche unique,
**caractérisé en ce que**
le dispositif d'éclairage contient au moins une unité d'éclairage (19, 19') qui est prévue sur une zone de bord latéral (17) de la couche lumineuse et anti-éclats (6) pour injecter de la lumière dans la couche lumineuse et anti-éclats (6), et
au moins une bande de positionnement (13) est prévue pour la fixation de l'unité d'éclairage (19) et/ou pour l'association de l'unité d'éclairage (19) à un bord d'injection (18) de la couche lumineuse et anti-éclats (6), la couche lumineuse et anti-éclats (6) étant formée par un film lumineux et anti-éclats qui est disposé contre, sur ou dans cette bande de positionnement (13) dont la zone de bord (17), contenant le bord d'injection (18), est située à une distance du côté intérieur (7) du capot.

2. Capot selon la revendication 1,
**caractérisé en ce que** la couche lumineuse et anti-éclats (6) a une épaisseur d'environ 0,15 mm à 0,75 mm et en particulier d'environ 0,2 mm à 0,5 mm et en particulier est formée par un film anti-éclats en polyéthylène téréphtalate (PET) d'une épaisseur de 0,2 mm.

3. Capot selon la revendication 1 ou 2,
**caractérisé en ce que** l'unité d'éclairage (19) contient des LED (29) ou des micro-LED qui sont disposées sur un bord d'injection (18) de la couche lumineuse et anti-éclats (6) le long du bord latéral (11) du capot (4).

4. Capot selon l'une des revendications 1 à 3,
**caractérisé en ce que** la bande de positionnement (13) est fixée au côté intérieur (7) du capot et la couche lumineuse et anti-éclats (6) est disposée sur cette bande de positionnement (13) dont la zone de bord (17), contenant le bord d'injection (18), est située à distance du côté intérieur (7) du capot.

5. Capot selon l'une des revendications 1 à 4,
**caractérisé en ce que** la bande de positionnement (13) comporte un côté intérieur ou inférieur avec lequel elle est disposée du côté intérieur (7) du capot et un côté extérieur ou supérieur opposé qui porte la couche lumineuse et anti-éclats (6) dont le bord d'injection (18), contenant la zone de bord (17), est situé à distance du côté intérieur (7) du capot,
le côté extérieur ou supérieur comportant une surface de transition inclinée (16) qui se termine par une pointe en forme de coin de la bande de positionnement (13) en direction du centre du capot et qui forme une base de fixation continue pour la couche lumineuse et anti-éclats (6).

6. Capot selon l'une des revendications 1 à 5,
**caractérisé en ce que** la bande de positionnement (13) comporte une portion de réception sur laquelle l'unité d'éclairage (19) peut être montée en association avec la couche lumineuse et anti-éclats (6).

7. Capot selon la revendication 6,
**caractérisé en ce que** la portion de réception est formée comme un épaulement (14) qui s'étend du bord d'injection (18) de la couche lumineuse et anti-éclats (6) en direction du bord latéral (11) du capot (4) et sur lequel une unité ou l'unité d'éclairage (19) est disposée.

8. Capot selon l'une des revendications 1 à 7,
**caractérisé en ce que** l'unité d'éclairage (19), qui comprend notamment une bande flexible ou une carte de circuit imprimé sur laquelle sont disposées des LED (29) ou des micro-LED, est fixée du côté intérieur (7) du capot ou sur la bande de positionnement (13) au moyen d'une couche adhésive ou d'une bande adhésive (20) .

9. Capot selon l'une des revendications 1 à 8,
**caractérisé en ce que** la couche lumineuse et anti-éclats (6) comporte au moins un évidement (35, 41) ou une interruption, dans lequel l'unité d'éclairage (19) ou la bande de positionnement (13) est disposée ou fixée du côté intérieur (7) du capot.

10. Capot selon l'une des revendications 1 à 9,
**caractérisé en ce que** la couche lumineuse et anti-éclats (6) est fixée, et en particulier est collée ou stratifiée, du côté intérieur (7) du capot.

11. Capot selon l'une des revendications 1 à 10,
**caractérisé en ce qu'**un panneau (21) recouvre au moins l'unité d'éclairage (19) et le bord latéral de la couche lumineuse et anti-éclats (6) et en particulier également la bande de positionnement (13).

12. Capot selon la revendication 11,
**caractérisé en ce que** le panneau (21) est fixé de part et d'autre de l'unité d'éclairage (19) d'une part à l'extérieur de l'unité d'éclairage (19) sur une zone de la couche lumineuse et anti-éclats (6) proche du bord du capot et d'autre part à l'intérieur de l'unité d'éclairage (19) sur une portion, intérieure au capot,
de la couche lumineuse et anti-éclats (6).

13. Capot selon l'une des revendications 1 à 8,
**caractérisé en ce que** le capot (4) comporte un cadre de capot côté bord (45) et la bande de positionnement (13) pourvue de l'unité d'éclairage (19) est fixée de manière adjacente à l'intérieur du capot et **en ce qu'**un panneau (21) est d'une part collé au côté intérieur (7) du capot par-dessus la couche lumineuse et anti-éclats (6) et d'autre part est relié au cadre de capot (45).

14. Capot selon l'une des revendications 11 à 13,
**caractérisé en ce que** le panneau (21) recouvre l'unité d'éclairage (19) et est fixé, en direction du centre du capot, à la couche lumineuse et anti-éclats (6) et, en direction du bord extérieur du capot, au côté intérieur (7) de la vitre, à la couche lumineuse et anti-éclats (6) appliquée du côté intérieur (7) de la vitre et à un cadre de capot (45) du côté du bord de la vitre.

15. Capot selon l'une des revendications 1 à 14,
**caractérisé en ce que** la vitre (5), du côté intérieur (7) de laquelle est fixée, et notamment collée ou stratifiée, la couche lumineuse et anti-éclats (6), forme le capot (4) du toit de véhicule, lequel capot ferme une ouverture du toit de véhicule.
